# EUROPEAN PATENT APPLICATION

(11) **EP 1 206 141 A2**
(43) Date of publication of application: **15.05.2002**
(21) Application number: 01309390.1
(22) Date of filing: 06.11.2001
(51) Int. Cl.: H04N 9/82

(54) **Digital-broadcast recording/playback apparatus**

(30) Priority: 13.11.2000 JP 2000345401
(71) Applicant: Sony Corporation, Tokyo 141-0001 (JP)
(72) Inventor: Sato, Masahiko, c/o Sony Corporation, Tokyo (JP)
(74) Representative: Robinson, Nigel Alexander Julian

(57) **Abstract**

A digital-content recording/playback apparatus separately records content and an A/V stream and plays back the separately recorded content and A/V stream. When separately recording the content and the A/V stream, a time at which the transmission of the content ends is added, as a time stamp which can be synchronized with the A/V stream, to the content.

## Description

The present invention relates to digital-broadcast recording/playback apparatuses, and in particular, to a digital-broadcast recording/playback apparatus in which, in digital broadcasting including data-carousel data broadcasting, pieces of content distributed by the data broadcasting are recorded without repetition and the recorded pieces are played back.

In a conventional technology for data broadcasting performed by digital broadcasting, content to be sent is divided to match the size of audio/video (A/V) packets as audio and video data of digital broadcast, and are sent as an MPEG transport stream which can transmit a plurality of programs, together with A/V packets. For example, as shown in Fig. 5, after a plurality of packets (blocks) obtained by dividing content, such as D1, D2... Dn, are inserted at points of time, the packets are transmitted as an MPEG transport stream, together with A/V packets. A receiver receives and accumulates the packets D1, D2... Dn, whereby the original data is re-formed and is played back.

One content transmission method for transmitting content in data broadcasting performed by the above digital broadcasting is data carousel transmission in which, based on a control method for accessing a file or a stream in a digital interactive service defined in the ISO standard ISO/IEC13818-6, "Digital Storage Media Command and Control (DSM-CC)", the transmission of general synchronous and asynchronous data, which does not need streaming such as downloading of data to a receiver, is implemented.

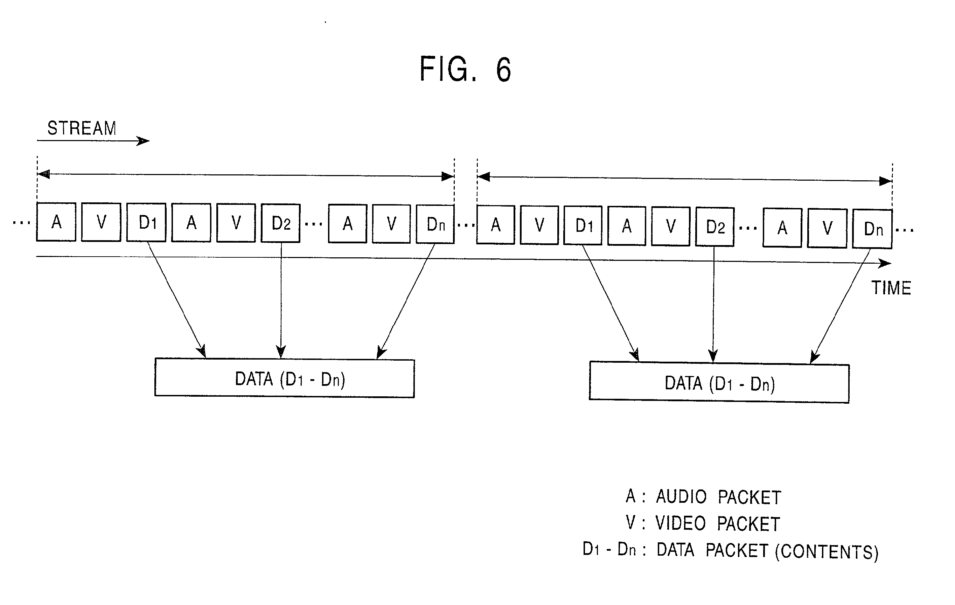

In data broadcasting by the data carousel transmission, content is unilaterally sent by multicasting. Thus, in order that a user may view the content if the user tunes the channel at any time, identical content must be repeatedly transmitted. Accordingly, as shown in Fig. 6, when performing data broadcasting, it is necessary to repeatedly perform the steps of: dividing content to be transmitted into a plurality of packets (blocks) D₁ to Dₙ so as to match the packet size of an A/V stream; transmitting the A/V stream after inserting the packets D₁ to Dₙ into the A/V stream; and, after transmitting all the packets D₁ to Dₙ, transmitting the packets D₁ to Dₙ after sequentially inserting each packet into an A/V stream again from the packet D₁. Accordingly, a receiver which receives a digital broadcast can start to acquire content at an arbitrary point during a period in which the data broadcast is transmitted.

When starting to receive the data broadcast, the receiver sequentially accumulates the packets (blocks) of the received data broadcast. When the reception of all the packets (blocks) D₁ to Dₙ ends, the received packets are rearranged to form the content, and the content is executed (played back). Concerning timing with which the receiver executes the content, a descriptor "Activation_Time_descriptor" is defined in STD-B24 of the Association of Radio Industries and Businesses (ARIB). At a time designated in this descriptor, the content of a module is validated, in other words, content is executed.

The "Activation_Time_descriptor" is described below.

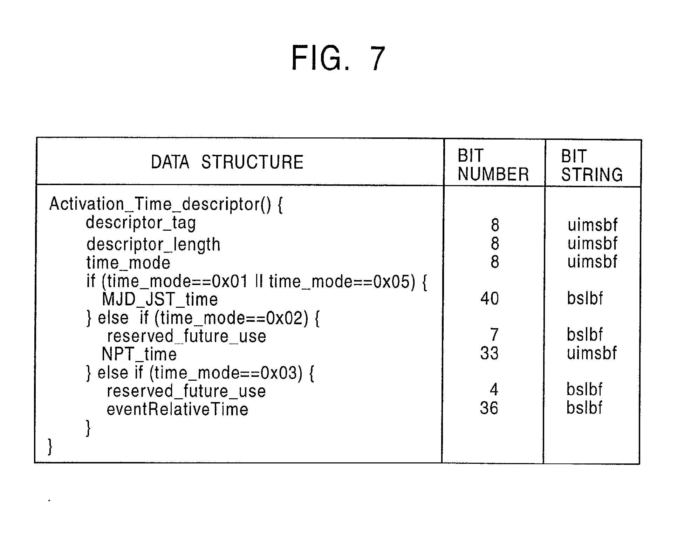

Referring to Fig. 7, an 8-bit field called "time_mode" in the "Activation_Time_descriptor" is used to indicate a method of designating a time of limitation, that is, timing with which content is executed. When the "time_mode" is "0×01" or "0×05", time designation by "MJD_JST_time" is indicated. In accordance with an absolute time represented by the modified Julian day (MJD) and the Japan standard time (JST), the content of the module is validated, that is, content is executed. When the "time_mode" is "0×02", time designation by "NPT_time" is indicated. In this case, in accordance with a time at which an event message is generated by "Normal Play Time (NPT)" defined in DSM-CC of the ISO standard ISO/IEC13818-6, content is executed. When the "time_mode" is "0×03", time designation by "eventRelativeTime" is indicated, and content is executed in accordance with a relative time from a program start time. In addition, when the "Activation_Time_descriptor" is not used, on receiving all the packets (of content), the content of the module is validated, that is, the content is executed (played back).

In the case of recording a stream including a data broadcast in accordance with the data carousel method, identical content is repeatedly transmitted, so that identical data (content) is repeatedly recorded and the recording efficiency of a recording medium deteriorates.

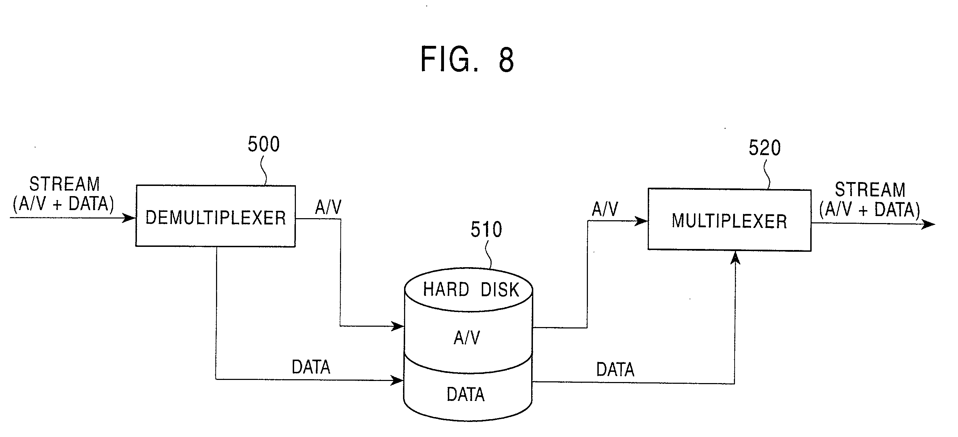

Accordingly, the recording of repeated data can be prevented by using the recording/playback apparatus shown in Fig. 8 which includes a demultiplexer 500 for separating a digital broadcast stream including content of a data broadcast into an A/V stream as audio and video data and data packets as data broadcast content, a hard disk 510 for recording the A/V stream and the data packets in separate areas, and a multiplexer 520 for outputting a stream by multiplexing the A/V stream and the data packets recorded in the hard disk 510,

In the recording/playback apparatus shown in Fig. 8, the digital broadcast stream to be recorded is separated into the data packets and the A/V stream by the demultiplexer 500. The data packets are processed to form a file, and the file is recorded in an area of the hard disk 510, which is different from an area for the A/V stream. In the playback mode of the recording/playback apparatus, the A/V stream and the data packets are read from the hard disk 510 by the multiplexer 520. The data packets in the file form are inserted at predetermined points of time of the A/V stream, whereby the original stream is re-formed and played back.

However, there may be a case in which, on receiving all the data packets which are transmitted in accordance with the data carousel method, the recording/playback apparatus immediately executes (plays back) the content. Thus, a problem occurs in that synchronization must be established between a data carousel termination time (a time at which the transmission of the data packets ends) and the A/V stream.

It is an object of at least preferred embodiments of the present invention to provide a digital-broadcast recording/playback apparatus in which, when the apparatus records a digital broadcast including a data broadcast which uses data carousel transmission to transmit content, the content is recorded without repetition, and the recorded content is played back at a designated time in synchronization with an audio/video stream.

According to the present invention there is provided a digital broadcast recording/playback apparatus for separately recording content and an audio/video stream when recording an MPEG-transport-stream digital broadcast including a data broadcast in which the content is transmitted by data carousel transmission, and for playing back the separately recorded content and audio/video stream. When the content and the audio/video stream are separately recorded, a time at which the transmission of the content ends is added as a time stamp capable of synchronizing the audio/video stream to the content.

Preferably, when the content is repeatedly transmitted with the identity thereof maintained, the content is recorded after the time at which the transmission of the content ends is added to the content, and for each content repeatedly transmitted after the recording, only a time at which the transmission of the repeated content ends is recorded.

When the recorded content is played back, the playback may be performed based on the time stamp in synchronization with the audio/video stream.

The recorded content may be re-formed based on the time stamp, and the re-formed content may be played back as an MPEG transport stream.

The time stamp may be generated based on the Program Clock Reference field defined in ISO 13818-1.

The time stamp may be generated based on the Normal Play Time field defined in ISO 13818-1.

According to the present invention, content and A/V stream of a data broadcast are separately recorded, and a time at which the transmission of the content ends is recorded as a time stamp so as to be synchronized with the A/V stream. When recording a data broadcast in which identical content is repeatedly transmitted, the content is recorded on a recording medium only once, and only a time at which the transmission of the next content ends is added as a time stamp to the recorded content. Thus, the content itself can be prevented from being repeatedly recorded. Accordingly, the storage capacity of the recording medium can be saved, and the recorded content can be played back (output) so as to be synchronized with the A/V stream and in accordance with a designated time.

Embodiments of the invention will now be described, by way of example only, with reference to the accompanying drawings in which:
Fig. 1 is a schematic block diagram showing the recording and playback parts of a digital-broadcast recording/playback apparatus according to an example embodiment of the present invention;
Fig. 2 is a schematic block diagram showing the recording part of the digital-broadcast recording/playback apparatus shown in Fig. 1;
Fig. 3 is a schematic block diagram showing the playback part of the digital-broadcast recording/playback apparatus shown in Fig. 1;
Fig. 4 is a schematic block diagram showing a digital-broadcast recording/playback apparatus into which a decoder and an application engine for displaying a reproduced TS stream are incorporated;

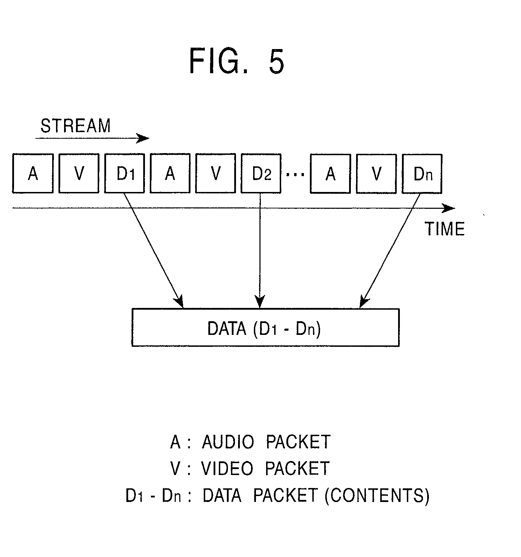

Fig. 5 is a schematic illustration of the reproduction of a data broadcast from a digital broadcast stream including a data broadcast;
Fig. 6 is a schematic illustration of a digital broadcast stream in data broadcasting using data carousel transmission;
Fig. 7 is an illustration of the data structure of a descriptor "Activation_Time" describing timing with which (content of) a data broadcast defined in ARIB standard STD-B24 on data broadcast coding and transmission in digital broadcasting; and
Fig. 8 is a schematic block diagram showing the main part of a recording/playback apparatus when it records and plays back a digital broadcast stream including a data broadcast.

With reference to the accompanying drawings, a digital-broadcast recording/playback apparatus according to an example embodiment of the present invention is described below.

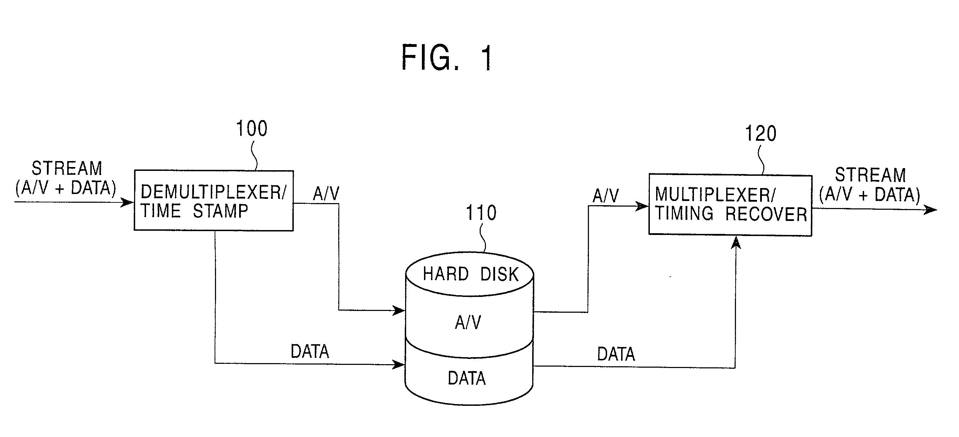

The digital-broadcast recording/playback apparatus shown in Fig. 1 includes a demultiplexer 100 which separates the transport (TS) stream of a digital broadcast including a data broadcast into an A/V stream as audio and video data and data packets as content of the data broadcast and which adds, to the data packets, time stamps as information of synchronization with the A/V stream, a hard disk 110 which records the A/V stream and the data packets in different fields, and a multiplexer 120 which reads the A/V stream and the data packets from the hard disk 110 and which outputs a stream obtained after multiplexing performed by inserting, in the A/V stream, the data packets at predetermined positions based on the time stamps added to the data packets.

The operation of the digital-broadcast recording/playback apparatus when it records and plays back a data broadcast transmitted in accordance with data carousel transmission in digital broadcasting is described below.

The demultiplexer 100 separates the TS stream of a digital broadcast into an A/V stream and data packets (content), and adds, to the data packets, time stamps as information of synchronization with the A/V stream. The demultiplexer 100 sends the A/V stream and the data packets to the hard disk 110. The hard disk 100 records them in predetermined separate areas.

Time information which is referred to when a broadcast program included in the stream (TS packets) is played back is used as each time stamp which is added when the data packets are recorded on the hard disk 110. "Program Clock Reference (PCR)" defined in ISO 13818-1 or NPT defined in ISO 13818-6 is used as the time information.

When the data broadcast is played back, the multiplexer 120 reads the A/V stream and the data packets from the hard disk 110, and inserts the data packets at predetermined time positions based on the time stamps added to the data packets, whereby the original TS stream is played back (output).

When the digital-broadcast recording/playback apparatus records a data broadcast in which identical content is repeatedly sent, it records all data packets once. After that, the digital-broadcast recording/playback apparatus records only a time stamp corresponding to a time at which the transmission of the data packets ends. The digital-broadcast recording/playback apparatus plays back (output) the data broadcast by inserting the once recorded data packets in accordance with the time stamps in predetermined time positions of the A/V stream.

Next, by showing the specific system structure of the recording part of the digital-broadcast recording/playback apparatus, the operation of the recording part is described below.

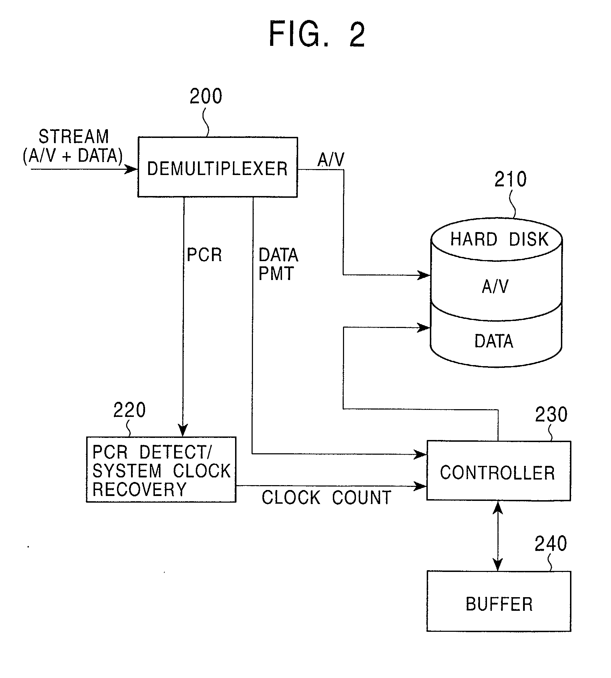

The recording part of the digital-broadcast recording/playback apparatus shown in Fig. 2 includes a demultiplexer 200 which separates the TS stream of the digital broadcast including a data broadcast into an A/V stream as audio and video data and data packets as content of data broadcast, a PCR detect/system clock recovery unit 220 which detects "Program Clock Reference (PCR)" as time information to be referred to when playing back a broadcast program from the TS stream via the demultiplexer 200 and which recovers system clocks, a controller 230 which sends the separated data packets to a buffer 240 and which, after adding a time stamp (sending termination time) to a data file loaded into the buffer 240 in accordance with the system clocks, sends the data file to the hard disk 210, and a hard disk 210 which records in separate areas the A/V stream from the demultiplexer 200 and the data file from the controller 230. A case in which the digital-broadcast recording/playback apparatus is used to record the digital broadcast is described below.

The TS stream of the digital broadcast is separated into an A/V stream and data packets (content) by the demultiplexer 200. The A/V stream is sent to the hard disk 210, and the data packets are sent to the PCR detect/system clock recovery unit 220.

The PCR detect/system clock recovery unit 220 detects a PCR which is included in the TS stream from the demultiplexer 200, recovers system clocks, and outputs the system clocks to the controller 230.

After receiving the data packets from the demultiplexer 200, the controller 230 loads the data packets as a file into the buffer 240. The system clocks from the PCR detect/system clock recovery unit 220 are counted by the controller 230. After the count at the time the transmission of the data packets ends is added to the data file in the buffer 240, the data file is sent to the hard disk 210.

When the NPT defined in ISO 13818-6 is used as the time stamp, "NPT Reference Descriptor" is read from a program included in the TS stream from the demultiplexer 200 and "Program Map Table" as a type of table information representing relationships between a program included in the TS stream from the demultiplexer 200 and each of (audio and video) elements constituting the program, and the read NPT Reference Descriptor is sent to the controller 230, with the data packets. The controller 230 calculates a difference between the NPT as time information and the count of the system clocks. A value obtained by adding the difference to the count of the system clocks is used as a time stamp. After adding the time stamp to the data file in the buffer 240, the data file is sent to the hard disk 210.

In the hard disk 210, the A/V stream from the demultiplexer 200, and the data file (content) to which the time stamp is added by the controller 230 are recorded. In a case in which identical content is repeatedly sent, after the controller 230 once records the time-stamp-added data file on the hard disk 210, only the transmission termination time of a data file corresponding to the next identical content is sent as a time stamp to the hard disk 210. The time stamp is added to the once recorded data file, and the thus obtained data file is recorded.

Next, a case in which an A/V stream and a time-stamp-added data file which are recorded on a hard disk are read and played back by a digital-broadcast recording/playback apparatus is described below with reference to a specific diagram.

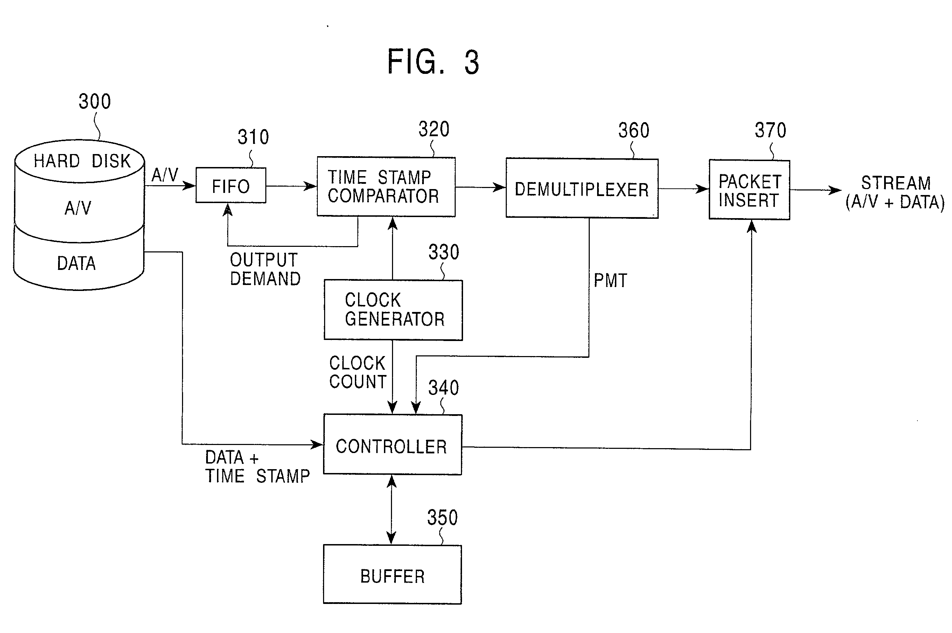

Referring to Fig. 3, the playback part of the digital-broadcast recording/playback apparatus includes: a hard disk 300 containing in separate areas an A/V stream as audio and video data, and a data file which is content of a data broadcast and to which the transmission termination time of content is added; a first-in first-out (FIFO) unit 310 for temporarily storing the A/V stream which is read from the hard disk 300; a clock generator 330 for generating clocks for establishing synchronization of each component; a time stamp comparator 320 which sends the A/V stream while establishing synchronization by comparing each time stamp of the A/V stream which is stored in the FIFO 310 and each clock from the clock generator 330; a demultiplexer 360 which sends, to a packet insert unit 370, the A/V stream from the time stamp comparator 320 and which, from the A/V stream, separates and sends, to a controller 340, the PMT as a type of table information representing relationships between a program and each of audio and video elements constituting the program; the controller 340 which, from the hard disk 300, reads and sends, to a buffer 350, the data file having the added time stamp (transmission termination time) and which sends the data file loaded into the buffer 350 to a packet insert unit 370 in accordance with the time information of the A/V stream obtained from the clocks from the clock generator 330 and the PMT from the demultiplexer 360 and with the time stamp added to the data file; and the packet insert unit 370 which outputs a TS stream obtained as a result of multiplexing performed by inserting the data file (from the controller 340) at predetermined positions in the A/V stream (from the demultiplexer 360).

The digital-broadcast recording/playback apparatus having the above playback part performs the following playback. The A/V stream recorded on the hard disk 300 is read and temporarily stored in the FIFO 310. The time stamp comparator 320 sends an output request to the FIFO 310, whereby the time stamp comparator 320 reads the time stamp of the A/V stream, establishes synchronization by comparing the read time stamp and each clock supplied from the clock generator 330, and sends the A/V stream to the demultiplexer 360.

From the A/V stream, the demultiplexer 360 separates and sends the PMT to the controller 340, and sends the A/V stream to the packet insert unit 370.

Also, the time-stamp-added data file recorded on the hard disk 300 is read and loaded into the buffer 350 by the controller 340. While establishing synchronization in accordance with the PMT from the demultiplexer 360, the time stamp added to the data file, and the clocks supplied from the clock generator 330, the data file loaded into the buffer 350 is sent to the packet insert unit 370.

The packet insert unit 370 re-forms the TS stream by sequentially inserting the data file from the controller 340 at predetermined time positions in the A/V stream from the demultiplexer 360. When identical content is repeatedly recorded, the controller 340 reads, from the hard disk 300, the data file and the time stamp added to the data file, and sends the data file to the packet insert unit 370 in accordance with the time stamp and the PMT. The packet insert unit 370 re-forms the stream by inserting the data file at predetermined time positions in the A/V stream.

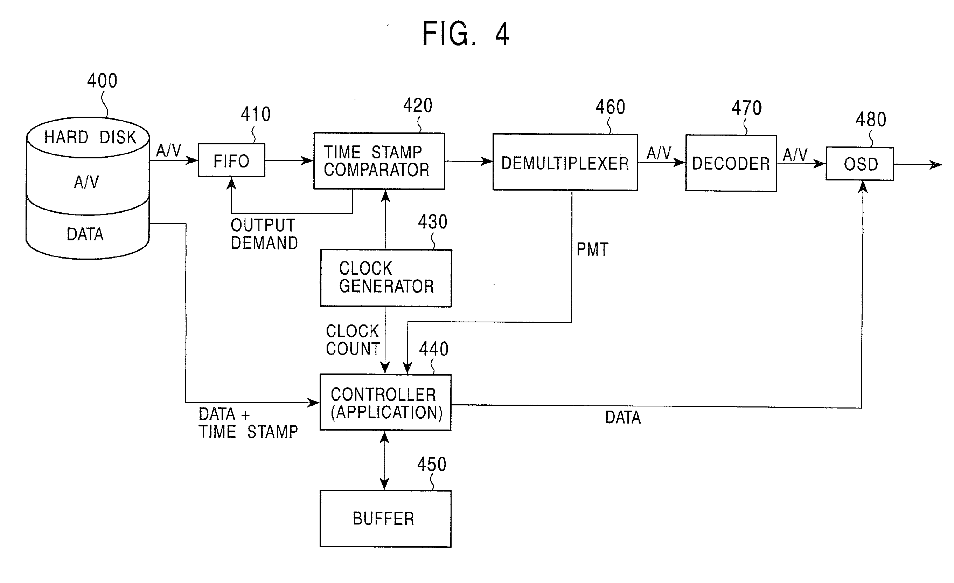

A digital-broadcast recording/playback apparatus into which a decoder and an application engine for displaying a reproduced TS stream are incorporated is described below with reference to Fig. 4

The playback/display part of the digital-broadcast recording/playback apparatus includes: a hard disk 400 containing, in separate area, an A/V stream as audio and video data, and a data file which is content of a data broadcast and to which the transmission termination time of content is added; a FIFO 410 in which the A/V stream read from the hard disk 400 are temporarily stored; a clock generator 430 for generating clocks for establishing synchronization of each component; a time stamp comparator 420 which sends the A/V stream while establishing synchronization by comparing each time stamp of the A/V stream which is stored in the FIFO 410 and each clock from the clock generator 430; a demultiplexer 460 which sends, to a packet insert unit 470, the A/V stream from the time stamp comparator 420 and which, from the A/V stream, separates and sends, to a controller 440, the PMT as a type of table information representing relationships between a program and each of audio and video elements constituting the program; the controller 440 which, from the hard disk 400, reads and sends, to a buffer 450, the data file having a time stamp (transmission termination time), and which, in accordance with each clock from the clock generator 430 and with the time information of the A/V stream obtained from PMT from the demultiplexer 460, reads the data file in a buffer 450 and sends, to an on-screen display (OSD) 480, a playback file obtained by using an application engine to play back the read file; a decoder 470 for decoding the A/V stream to generate pictures and sound; and the OSD 480 for outputting the pictures and sound generated by the decoder 470 and displaying the data from the controller 440.

The playback/display operation of the digital-broadcast recording/playback apparatus having the above playback/display part is described below.

The A/V stream recorded on the hard disk 400 is read and temporarily stored in the FIFO 410. The time stamp comparator 420 sends an output request to the FIFO 410, whereby the time stamp comparator 420 reads the time stamp of the A/V stream, establishes synchronization by comparing the read time stamp and each clock supplied from the clock generator 430, and sends the A/V stream to the demultiplexer 460.

The demultiplexer 460 separates the PMT from the A/V stream, and sends the PMT to the controller 440. At the same time, the demultiplexer 460 sends the A/V stream to the decoder 470. After decoding the A/V stream to generate pictures and sound, the demultiplexer 460 sends the generated pictures and sound to the OSD 480 for displaying the pictures.

Also, the time-stamp-added data file recorded on the hard disk 400 is read and loaded into the buffer 450 by the controller 440. While establishing synchronization by using the clocks supplied from the clock generator 430 and in accordance with the PMT from the demultiplexer 460 and the time stamp added to the data file, the data file loaded into the buffer 450 is played back by the application engine, and is sent to the OSD 480.

The OSD 480 outputs the pictures and sound from the decoder 470. The data broadcast played back by the application engine in the controller 440 can be displayed on a screen in a form in which it is inserted in a predetermined time position. When identical content is repeatedly recorded, the controller 440 reads the data file and the time stamp from the hard disk 400, and uses the application engine to play back the data file in accordance with the time stamp and the PMT before sending the data file to the OSD 480, whereby the data file can be displayed in a form in which it is inserted at a predetermined time position.

## Claims

1. A digital-broadcast recording/playback apparatus for separately recording content and an audio/video stream when recording an MPEG-transport-stream digital broadcast including a data broadcast in which the content is transmitted by data carousel transmission, and for playing back the separately recorded content and audio/video stream, wherein, when the content and the audio/video stream are separately recorded, a time at which the transmission of the content ends is added as a time stamp capable of synchronizing the audio/video stream to the content.

2. A digital-broadcast recording/playback apparatus according to Claim 1, wherein, when the content is repeatedly transmitted with the identity thereof maintained, the content is recorded after the time at which the transmission of the content ends is added to the content, and for each content repeatedly transmitted after the recording, only a time at which the transmission of the repeated content ends is recorded.

3. A digital-broadcast recording/playback apparatus according to Claim 1, wherein, when the recorded content is played back, the playback is performed based on the time stamp in synchronization with the audio/video stream.

4. A digital-broadcast recording/playback apparatus according to Claim 1, wherein the recorded content is re-formed based on the time stamp, and the re-formed content is played back as an MPEG transport stream.

5. A digital-broadcast recording/playback apparatus according to Claim 1, wherein the time stamp is generated based on the Program Clock Reference field defined in ISO 13818-1.

6. A digital-broadcast recording/playback apparatus according to Claim 1, wherein the time stamp is generated based on the Normal Play Time field defined in ISO 13818-1.
